# NEUE EUROPÄISCHE PATENTSCHRIFT

(11) **EP 1 401 969 B2**
(45) Veröffentlichungstag und Bekanntmachung des Hinweises auf die Entscheidung über den Einspruch: **10.04.2013**
(45) Hinweis auf die Patenterteilung: 29.07.2009
(21) Anmeldenummer: 02754696.9
(22) Anmeldetag: 18.06.2002
(51) Int. Cl.: C09D 5/36, C09D 5/38, C09D 7/12

(54) **LÖSEMITTELHALTIGER BESCHICHTUNGSSTOFF ENTHALTEND EIN PULVER UND SEINE VERWENDUNG**
SOLVENTCONTAINING COATING SUBSTANCE COMPRISING A POWDER AND USE THEREOF
SUBSTANCE DE REVETEMENT COMPRENANTE UN SOLVENT ET UN POUDRE ET UTILISATION DE LADITE SUBSTANCE

(30) Priorität: 21.06.2001 DE 10129899
(43) Veröffentlichungstag der Anmeldung: 31.03.2004
(73) Patentinhaber: BASF Coatings GmbH, 48165 Münster (DE)
(72) Erfinder: SCHWARTE, Stephan, 48282 Emsdetten (DE); VESPER, Willi, 97353 Wiesentheid (DE); WEGNER, Egon, 48268 Greven (DE); ZIEGLER, Kerstin, 97529 Moenchstockheim (DE)
(74) Vertreter: Leifert & Steffan
(86) Internationale Anmeldenummer: PCT/EP2002/006702
(87) Internationale Veröffentlichungsnummer: WO 2003/000807

(56) Entgegenhaltungen:
- EP-A2- 0 178 096
- WO-A-01/57142
- FR-A- 2 746 809
- US-A- 4 220 679
- US-A- 4 680 204
- PATENT ABSTRACTS OF JAPAN vol. 1997, no. 01, 31. Januar 1997 (1997-01-31) & JP 08 231904 A (KANSAI PAINT CO LTD), 10. September 1996 (1996-09-10) & JAPAN PATENT OFFICE, [Online] Gefunden im Internet: <URL:http://www6.ipdl.jpo.go.jp/Tokujitu/P AJdetail.ipdl?N0000=60&N0120=01&N2001=2&N3 001=H08-231904> [gefunden am 2002-10-22]
- CADLE R.D.: 'Particle size determination', 1955, INTERSCIENCE PUBLISHES INC., NEW YORK Seiten 92 - 101
- Kaolin aus Wikipedia, 23.03.2010

## Beschreibung

Die vorliegende Erfindung betrifft einen neuen lösemittelhaltigen Beschichtungsstoff und seine Verwendung zur Herstellung von ein- und mehrschichtigen farb- und/oder effektgebenden Lackierungen in der Automobilerst- und -reparaturlackierung, der industrielle Lackierung, inclusive Coil Coating und Container Coating, der Kunststofflackierung und der Möbellackierung.

Physikalisch, thermisch oder thermisch und mit aktinischer Strahlung härtbare, lösemittelhaltige Beschichtungsstoffe sind seit langem bekannt. Diese bekannten lösemittelhaltigen Beschichtungsstoffe, insbesondere die sogenannten Basislacke, und die hiermit hergestellten ein- oder mehrschichtigen farb- und/oder effektgebenden Lackierungen weisen sehr gute anwendungstechnische Eigenschaften auf.

Enthalten die aus den bekannten lösemittelhaltigen Beschichtungsstoffen hergestellten ein- oder mehrschichtigen farb- und effektgebende Lackierungen Effektpigmente, insbesondere Metallic-Pigmente, kann es zur Bildung von sogenannten Wolken, d. h. von Hell-Dunkel-Schattierungen, kommen. Diese sind ein Hinweis auf Mängel der Dispergierung und/oder Orientierung der farb- und/oder effektgebenden Pigmente, insbesondere der Effektpigmente, in der Lackierung. Wolkige Lackierungen werden aber gerade bei besonders hochwertigen Produkten, die großflächige Lackierungen aufweisen, wie beispielsweise Automobile, grundsätzlich nicht akzeptiert, weil solche Lackstörungen den Eindruck minderer Qualität des Gesamtprodukts (z. B. Automobil) erwecken.

Wolken treten insbesondere bei farb- und effektgebenden Lackierungen mit hellen Metallic-Farbtönen auf. Die Wolkenbildung ist abhängig von der Schichtdicke und dem Nässegrad und tritt deshalb verstärkt in den Überlappungszonen der von den Zerstäubern erzeugten Lackstrahlen auf.

Außerdem treten bei der Reparaturlackierung unter Verwendung der bekannten lösemittelhaltigen Beschichtungsstoffe nicht akzeptable Unterschiede im Farbton zwischen der Originallackierung der Reparaturlackierung auf, wenn ein und derselbe Basislack verwendet wird. Diese unerwünschten Farbtonunterschiede entstehen vor allem deswegen, weil die Original-Basislackierung durch elektrostatisches Sprühen oder durch elektrostatisches Sprühen und pneumatisch appliziert wird, wogegen die Reparaturlackierung rein pneumatisch aufgetragen wird.

Aus dem amerikanischen Patent US 4,652,470 A ist ein Naß-in-naß-Verfahren zur Herstellung farb- und/oder effektgebender Mehrschichtlackierungen bekannt, bei dem der lösemittelhaltige Basislack unlösliche Polymermikropartikel eines Durchmessers von 0,01 bis 40 µm aufweisen. Um ein "Einbrechen" (strike-in) der Klarlackschicht in die Basislackschicht zu verhindern, müssen die Klarlacke obligatorisch anorganische Mikropartikel einer Teilchengröße von 1 bis 150 nm enthalten.

In der nicht vorveröffentlichten deutschen Patentanmeldung DE 100 04 494.8 wird ein physikalisch oder thermisch und/oder mit aktinischer Strahlung härtbarer wäßriger Beschichtungsstoff beschrieben, der
A) mindestens ein gesättigtes, ungesättigte und/oder mit olefinisch ungesättigten Verbindungen gepfropftes, ionisch und/oder nichtionisch stabilisiertes Polyurethan als Bindemittel,
B) mindestens ein farb- und/oder effektgebendes Pigment und
C) mindestens ein farbloses, gegenüber den übrigen Bestandteilen des Beschichtungsstoffs im wesentlichen inertes, transparentes oder opakes Pulver einer mittleren Teilchengröße von 1,0 bis 10,0 µm, dessen Partikel eine Dichte von 0,8 bis 3,6 gcm⁻³ aufweisen,
enthält. Der wäßrige Beschichtungsstoff liefert Wasserbasislackierungen, die nur eine geringe Wolkenbildung aufweisen.

Aufgabe der vorliegenden Erfindung ist es, einen neuen physikalisch, thermisch oder thermisch und mit aktinischer Strahlung härtbaren, lösemittelhaltigen Beschichtungsstoff bereitzustellen, der sehr gut als Basislack oder als Unidecklack zur Herstellung ein- und mehrschichtiger farb- und effektgebender Lackierungen geeignet ist, die eine deutlich verringerte Wolkenbildung zeigen.

Die mit Hilfe der neuen, lösemittelhaltigen Beschichtungsstoffe hergestellten farb- und effektgebenden Lackierungen sollen eine verbesserte Farbtonstabilität bei einer Änderung der Schichtdicke und/oder des Nässegrades haben. Außerdem sollen Originallackierungen und Reparaturlackierungen im Farbton übereinstimmen, wenn ein und derselbe lösemittelhaltige Basislack verwendet wird.

Demgemäß wurde der neue physikalisch, thermisch oder thermisch und mit aktinischer Strahlung härtbare, lösemittelhaltige Beschichtungsstoff gefunden, der
A) mindestens ein physikalisch, thermisch oder thermisch und mit aktinischer Strahlung härtbares Bindemittel,
B) mindestens ein farb- und/oder effektgebendes Pigment und
C) mindestens ein farbloses, gegenüber den übrigen Bestandteilen des Beschichtungsstoffs im wesentlichen inertes, transparentes oder opakes Pulver dessen Partikel eine Dichte von 1,25 bis 3,6 gcm⁻³ aufweisen; enthält, wobei das Bindemittel (A) bzw. die Bindemittel (A) Polyester ist bzw. sind und das Pulver (C) eine mittlere Teilchengrösse von 4,0 bis 7,0 µm und eine maximale Teilchengrösse unterhalb 12 µm aufweist und aus Siliziumdioxid besteht.
enthält und der im folgenden als "erfindungsgemäßer Beschichtungsstoff" bezeichnet wird.

Weitere Erfindungsgegenstände gehen aus der nachfolgenden Beschreibung hervor.

Im Hinblick auf den Stand der Technik war es überraschend und für den Fachmann nicht vorhersehbar, daß die der vorliegenden Erfindung zugrundeliegende Aufgabe mit Hilfe des speziell ausgewählten erfindungsgemäß zu verwendenden Pulvers (C) gelöst werden konnte. Denn eher stand es zu erwarten, daß die Verwendung von Pulvern (C), deren mittleren Teilchengröße in der Größenordnung der Trockenschichtdicke der aus den erfindungsgemäßen Beschichtungsstoffen hergestellten Basislacke oder Unidecklacke liegt, schwerwiegende Nachteile, insbesondere hinsichtlich der Qualität des optischen Gesamteindrucks sowie der Stärke der Zwischenschichthaftung, mit sich bringen würde. Außerdem war es überraschend, daß kein oder nur ein sehr geringer, akzeptabler Farbtonunterschied auftrat, wenn eine aus dem erfindungsgemäßen Beschichtungsstoff hergestellten Basislackierung mit ein und demselben erfindungsgemäßen Beschichtungsstoff reparaturlackiert wurde.

Der erfindungsgemäße Beschichtungsstoff kann physikalisch härtend sein.

Im Rahmen der vorliegenden Erfindung bedeutet der Begriff "physikalische Härtung" die Härtung einer Schicht aus einem Beschichtungsstoff durch Verfilmung durch Lösemittelabgabe aus dem Beschichtungsstoff, wobei die Verknüpfung innerhalb der Beschichtung über Schlaufenbildung der Polymermoleküle der Bindemittel (zu dem Begriff vgl. Römpp Lexikon Lacke und Druckfarben, Georg Thieme Verlag, Stuttgart, New York, 1998, »Bindemittel«, Seiten 73 und 74) erfolgt. Oder aber die Verfilmung erfolgt über die Koaleszenz von Bindemittelteilchen (vgl. Römpp Lexikon Lacke und Druckfarben, Georg Thieme Verlag, Stuttgart, New York, 1998, »Härtung«, Seiten 274 und 275). Üblicherweise sind hierfür keine Vernetzungsmittel notwendig. Gegebenenfalls kann die physikalische Härtung durch Luftsauerstoff, Hitze oder durch Bestrahlen mit aktinischer Strahlung unterstützt werden.

Der erfindungsgemäße Beschichtungsstoff kann thermisch härtbar sein. Hierbei kann er selbstvernetzend oder fremdvernetzend sein.

Im Rahmen der vorliegenden Erfindung bezeichnet der Begriff "selbstvernetzend" die Eigenschaft eines Bindemittels mit sich selbst Vernetzungsreaktionen einzugehen. Voraussetzung hierfür ist, daß in den Bindemitteln bereits beide Arten von komplementären reaktiven funktionellen Gruppen enthalten sind, die für eine Vernetzung notwendig sind, oder aber das Bindemittel enthält reaktive funktionelle Gruppen, die "mit sich selbst" reagieren können. Als fremdvernetzend werden dagegen solche Beschichtungsstoffe, Klebstoffe und Dichtungsmassen bezeichnet, worin die eine Art der komplementären reaktiven funktionellen Gruppen in dem Bindemittel, und die andere Art in einem Härter oder Vernetzungsmittel vorliegen. Ergänzend wird hierzu auf Römpp Lexikon Lacke und Druckfarben, Georg Thieme Verlag, Stuttgart, New York, 1998, »Härtung«, Seiten 274 bis 276, insbesondere Seite 275, unten, verwiesen.

Der erfindungsgemäße Beschichtungsstoff kann thermisch und mit aktinischer Strahlung härtbar sein. Werden die thermische und die Härtung mit aktinischer Strahlung bei einem Beschichtungsstoff gemeinsam angewandt, spricht man auch von "Dual Cure" und " Dual-Cure-Beschichtungsstoff".

Im Rahmen der vorliegenden Erfindung ist unter aktinischer Strahlung elektromagnetische Strahlung, wie nahes Infrarot (NIR), sichtbares Licht, UV-Strahlung oder Röntgenstrahlung, insbesondere UV-Strahlung, und Korpuskularstrahlung, wie Elektronenstrahlung, zu verstehen.

Der erfindungsgemäße Beschichtungsstoff kann ein Einkomponenten(1K)-System sein.

Im Rahmen der vorliegenden Erfindung ist unter einem Einkomponenten(1K)-System ein thermisch oder thermisch und mit aktinischer Strahlung härtender Beschichtungsstoff zu verstehen, bei dem das Bindemittel und das Vernetzungsmittel nebeneinander, d.h. in einer Komponente, vorliegen. Voraussetzung hierfür ist, daß die beiden Bestandteile erst bei höheren Temperaturen und/oder bei Bestrahlen mit aktinischer Strahlung miteinander vernetzen.

Der erfindungsgemäße Beschichtungsstoff kann des weiteren ein Zweikomponenten(2K)- oder Mehrkomponenten(3K, 4K)-System sein.

Im Rahmen der vorliegenden Erfindung ist hierunter ein Beschichtungsstoff zu verstehen, bei dem insbesondere das Bindemittel und das Vernetzungsmittel getrennt voneinander in mindestens zwei Komponenten vorliegen, die erst kurz vor der Applikation zusammengegeben werden. Diese Form wird dann gewählt, wenn Bindemittel und Vernetzungsmittel bereits bei Raumtemperatur miteinander reagieren. Beschichtungsstoffe dieser Art werden vor allem zur Beschichtung thermisch empfindlicher Substrate, insbesondere in der Autoreparaturlackierung, angewandt.

Der erfindungsgemäße Beschichtungsstoff ist lösemittelhaltig. Dies bedeutet, daß seine Bestandteile in mindestens einem organischen Lösemittel gelöst und/oder dispergiert vorliegen.

Der wesentliche Bestandteil des erfindungsgemäßen Beschichtungsstoffs ist das Pulver (C). Hierbei handelt es sich um ein einheitlich zusammengesetztes Pulver (C), d. h., daß seine Partikel stofflich dieselbe Zusammensetzung haben.

Das erfindungsgemäß zu verwendende Pulver (C) ist farblos. Dies bedeutet, daß es keinen Buntton und keine Buntheit, sondern nur Helligkeit aufweist. Somit ist es weiß oder weist einen Grauton auf. Vorzugsweise ist es aber weiß. Ergänzend wird auf Römpp Lexikon Lacke und Druckfarben, Georg Thieme Verlag, Stuttgart, New York, 1998 »Unbuntpunkt«, Seite 590, verwiesen.

Das Pulver (C) ist transparent im Sinne von lasierend oder opak im Sinne von deckend. Vorzugsweise werden transparente Pulver (C) angewandt.

Das Pulver (C) ist im wesentlichen inert. D. h., daß es innerhalb des für die Herstellung, die Lagerung und die Verarbeitung des erfindungsgemäßen Beschichtungsstoffs üblicherweise vorgesehenen Zeitraums in den in dem erfindungsgemäßen Beschichtungsstoff vorhandenen organischen Lösemitteln nur schwer löslich oder unlöslich ist, keine wesentlichen Bestandteile des Beschichtungsstoffs absorbiert oder ausflockt, keine chemischen Reaktionen oder nur sehr langsam ablaufende chemische Reaktionen mit wesentlichen Bestandteilen des Beschichtungsstoffs eingeht, keine chemischen Reaktionen zwischen den wesentlichen Bestandteilen des Beschichtungsstoffs katalysiert und durch Hitze und/oder aktinisches Licht in seinen Eigenschaften nicht oder nur sehr langsam verändert wird.

Das Pulver (C) weist eine mittlere Teilchengröße von 4,0 bis 7,0 µm auf.

Vorteilhafte Pulver (C) haben eine vergleichsweise enge Korngrößenverteilung. D. h., daß sowohl der Anteil an Feinstkom als auch an Grobkom vergleichsweise gering ist. Pulver (C) haben hierbei eine maximale Teilchengröße unterhalb 12, vorzugsweise unterhalb 11 und insbesondere unterhalb 10 µm.

Die Partikel des erfindungsgemäß zu verwendenden Pulvers (C) haben eine Dichte von 1,25 bis 3,6, vorzugsweise 1,3 bis 3,4, bevorzugt 1,35 bis 3,2 und insbesondere 1,4 bis 3,0 gcm⁻³.

In Einzelfällen können auch Partikel mit einer höheren Dichte verwendet werden, indes besteht dann die Gefahr, daß sich die Partikel bei länger Lagerung vergleichsweise schnell absetzen.

Die Partikel der erfindungsgemäß zu verwendenden Pulver (C) können von beliebiger Form sein. Erfindungsgemäß ist es von Vorteil, wenn sie sphärische Form haben. Im Rahmen der vorliegenden Erfindung ist unter sphärischer Form eine im wesentlichen kugelige Form zu verstehen. Beispiele kugeliger Formen sind Kugeln, eiförmige Partikel, Dodekaeder oder lkosaeder, die auch gewisse Unregelmäßigkeiten aufweisen können.

Gegebenenfalls werden die Oberflächen der Partikel einer Nachbehandlung, beispielsweise einer Hydrophilierung oder einer Hydrophobierung, unterzogen. Die Nachbehandlung darf aber nicht die Inertheit der Partikel aufheben.

Die Pulver (C) können als solche in die erfindungsgemäßen Beschichtungsstoffe eingearbeitet werden, sofern sie sich hierbei leicht verteilen und nicht agglomerieren. Erfindungsgemäß ist es von Vorteil, wenn die Pulver (C) als Pulverpasten eingearbeitet werden. Weitere Vorteile resultieren, wenn als Pastenharze oder Reibharze Bindemittel verwendet werden, die im erfindungsgemäßen Beschichtungsstoff enthalten sind.

Der Gehalt der erfindungsgemäßen Beschichtungsstoffe an den Pulvern (C) kann sehr breit variieren und richtet sich vor allem nach der Intensität der Hell-Dunkel-Schattierungen, die es zu vermeiden gilt, und nach dem vorgegebenen Farbton der farb- und effektgebenden Beschichtung, die aus dem betreffenden erfindungsgemäßen Beschichtungsstoff hergestellt wird. Vorzugsweise werden 0,05 bis 7,0, bevorzugt 0,075 bis 5,0 und insbesondere 0,1 bis 3,5 Gew.-%, jeweils bezogen auf den Festkörper des erfindungsgemäßen Beschichtungsstoffs, angewandt.

Der weitere wesentliche Bestandteil des erfindungsgemäßen Beschichtungsstoffs ist mindestens ein Bindemittel (A).

Von diesen Bindemitteln (A) weisen die (Meth)Acrylat(co)polymerisate und die Polyester, insbesondere die Polyester, besondere Vorteile auf und werden deshalb besonders bevorzugt verwendet.

Die selbstvernetzenden Bindemittel (A) der thermisch härtbaren und thermisch und mit aktinischer Strahlung härtbaren erfindungsgemäßen Beschichtungsstoffe enthalten reaktive funktionelle Gruppen, die mit Gruppen ihrer Art oder mit komplementären reaktiven funktionellen Gruppen Vernetzungsreaktionen eingehen können. Die fremdvernetzenden Bindemittel (A) enthalten reaktive funktionelle Gruppen, die mit komplementären reaktiven funktionellen Gruppen, die in Vernetzungsmitteln (E) vorliegen, Vernetzungsreaktionen eingehen können. Beispiele geeigneter erfindungsgemäß zu verwendender komplementärer reaktiver funktioneller Gruppen sind in der folgenden Übersicht zusammengestellt. In der Übersicht steht die Variable R für einen acyclischen oder cyclischen aliphatischen, einen aromatischen und/oder einen aromatisch-aliphatischen (araliphatischen) Rest; die Variablen R^{'} und R^{"} stehen für gleiche oder verschiedene aliphatische Reste oder sind miteinander zu einem aliphatischen oder heteroaliphatischen Ring verknüpft.

### Übersicht: Beispiele komplementärer funktioneller Gruppen

| **Bindemittel und Vernetzungsmittel oder Vernetzungsmittel und Bindemittel** | |
|---|---|
| -SH | -C(O)-OH |
| -NH₂ | -C(O)-O-C(O)- |
| -OH | -NCO |
| -O-(CO)-NH-(CO)-NH₂ | -NH-C(O)-OR |
| -O-(CO)-NH₂ | -CH₂-OH |
| >NH | -CH₂-O-R |
| | -NH-CH₂-O-R |
| | -NH-CH₂-OH |
| | -N(-CH₂-O-R)₂ |
| | -NH-C(O)-CH(-C(O)OR)₂ |
| | -NH-C(O)-CH(-C(O)OR)(-C(O)-R) |
| | -NH-C(O)-NR'R" |
| | > Si(OR)₂ |
| | 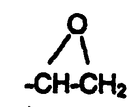 |
| | 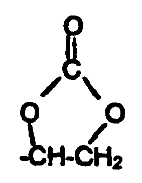 |
| -C(O)-OH | 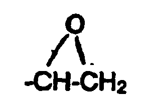 |
| | -C(O)-N(CH₂-CH₂-OH)₂ |

Die Auswahl der jeweiligen komplementären Gruppen richtet sich zum einen danach, daß sie bei der Herstellung, der Lagerung und der Applikation der erfindungsgemäßen Beschichtungsstoffe keine unerwünschten Reaktionen, insbesondere keine vorzeitige Vernetzung, eingehen und/oder gegebenenfalls die Härtung mit aktinischer Strahlung nicht stören oder inhibieren dürfen, und zum anderen danach, in welchem Temperaturbereich die Vernetzung stattfinden soll.

Vorzugsweise werden bei den erfindungsgemäßen zu verwendenden Beschichtungsstoffen Vernetzungstemperaturen von 60 bis 180°C angewandt. Es werden daher vorzugsweise Thio-, Hydroxyl-, N-Methylolamino- N-Alkoxymethylamino-, Imino-, Carbamat-, Allophanat- und/oder Carboxylgruppen, bevorzugt Hydroxyl- oder Carboxylgruppen, einerseits und vorzugsweise Vernetzungsmittel mit Anhydrid-, Carboxyl-, Epoxy-, blockierten Isocyanat-, Urethan-, Methylol-, Methylolether-, Siloxan-, Carbonat-, Amino-, Hydroxy- und/oder beta- Hydroxyalkylamidgruppen, bevorzugt Epoxy-, beta-Hydroxyalkylamid-, blockierte und unblockierte Isocyanat-, Urethan- oder Alkoxymethylaminogruppen, andererseits angewandt.

Im Falle selbstvemetzender erfindungsgemäßer Beschichtungsstoffe enthalten die Bindemittel insbesondere Methylol-, Methylolether- und/oder N-Alkoxymethylaminogruppen.

Komplementäre reaktive funktionelle Gruppen, die für die Verwendung in den erfindungsgemäßen Beschichtungsstoffen besonders gut geeignet sind, sind Hydroxylgruppen einerseits und blockierte und unblockierte Isocyanat-, Urethan- oder Alkoxymethylaminogruppen andererseits.

Die Funktionalität der Bindemittel (A) bezüglich der vorstehend beschriebenen reaktiven funktionellen Gruppen kann sehr breit variieren und richtet sich insbesondere nach der Vemetzungsdichte, die man erzielen will, und/oder nach der Funktionalität der jeweils angewandten Vernetzungsmittel (E). Beispielsweise liegt im Falle hydroxylgruppenhaltiger Bindemittel (A) liegt die OH-Zahl vorzugsweise bei 15 bis 300, bevorzugt 20 bis 250, besonders bevorzugz 25 bis 200, ganz besonders bevorzugt 30 bis 150 und insbesondere 35 bis 120 mg KOH/g.

Die vorstehend beschriebenen komplementären funktionellen Gruppen können nach den üblichen und bekannten Methoden der Polymerchemie in die Bindemittel (A) eingebaut werden. Dies kann beispielsweise durch den Einbau von Monomeren, die die entsprechenden reaktiven funktionellen Gruppen tragen, und/oder mit Hilfe polymeranaloger Reaktionen geschehen.

Beispiele geeigneter olefinisch ungesättigter Monomere mit reaktiven funktionellen Gruppen sind
a1) Monomere, welche mindestens eine Hydroxyl-, Amino-, Alkoxymethylamino-, Carbamat-, Allophanat- oder Iminogruppe pro Molekül tragen, wie Umsetzungsprodukte aus cyclischen Estern, wie z.B. epsilon-Caprolacton und diesen Hydroxyalkyl- oder - cycloalkylestern;
   - olefinisch ungesättigte Alkohole wie Allylalkohol;
   - Polyole wie Trimethylolpropanmono- oder diallylether oder Pentaerythritmono-, -di- oder -triallylether;

Beispiele geeigneter Monomereinheiten zur Einführung reaktiver funktioneller Gruppen in Polyester (A) sind 2,2-Dimethylolethyl- oder - propylamin, die mit einem Keton blockiert sind, wobei die resultierende Ketoximgruppe nach dem Einbau wieder hydrolysiert wird; oder Verbindungen, die zwei Hydroxylgruppen oder zwei primäre und/oder sekundäre Aminogruppen sowie mindestens eine Säuregruppe, insbesondere mindestens eine Carboxylgruppe und/oder mindestens eine Sulfonsäuregruppe, enthalten, wie Dihydroxypropionsäure, Dihydroxybernsteinsäure, Dihydroxybenzoesäure, 2,2-Dimethylolessigsäure, 2,2-Dimethylolpropionsäure, 2,2-Dimethylolbuttersäure, 2,2-Dimenthylolpentansäure, alpha,omega-Diaminovaleriansäure, 3,4-Diaminobenzoesäure, 2,4-Diaminotoluolsulfonsäure oder 2,4-Diaminodiphenylethersulfonsäure.

Ein Beispiel zur Einführung reaktiver funktioneller Gruppen über polymeranaloge Reaktionen ist die Umsetzung Hydroxylgruppen enthaltender Harze mit Phosgen, wodurch Chlorformiatgruppen enthaltende Harze resultieren, und die polymeranaloge Umsetzung der Chlorformiatgruppen enthaltenden Harze mit Ammoniak und/oder primären und/oder sekundären Aminen zu Carbamatgruppen enthaltenden Harzen. Weitere Beispiele geeigneter Methoden dieser Art sind aus den Patentschriften US 4,758,632 A1, US 4,301,257 A1 oder US 2,979,514A1 bekannt.

Die Bindemittel (A) der erfindungsgemäßen Dual-Cure-Beschichtungsstoffe enthalten desweiteren im statistischen Mittel mindestens eine, vorzugsweise mindestens zwei, Gruppe(n) mit mindestens einer mit aktinischer Strahlung aktivierbaren Bindung(en) pro Molekül.

Im Rahmen der vorliegenden Erfindung wird unter einer mit aktinischer Strahlung aktivierbaren Bindung eine Bindung verstanden, die bei Bestrahlen mit aktinischer Strahlung reaktiv wird und mit anderen aktivierten Bindungen ihrer Art Polymerisationsreaktionen und/oder Vernetzungsreaktionen eingeht, die nach radikalischen und/oder ionischen Mechanismen ablaufen. Beispiele geeigneter Bindungen sind Kohlenstoff-Wasserstoff-Einzelbindungen oder Kohlenstoff-Kohlenstoff-, Kohlenstoff-Sauerstoff-, Kohlenstoff-Stickstoff-, Kohlenstoff-Phosphor-oder Kohlenstoff-Silizium-Einzelbindungen oder -Doppelbindungen. Von diesen sind die Kohlenstoff-Kohlenstoff-Doppelbindungen besonders vorteilhaft und werden deshalb erfindungsgemäß ganz besonders bevorzugt verwendet. Der Kürze halber werden sie im folgenden als "Doppelbindungen" bezeichnet.

Demnach enthält die erfindungsgemäß bevorzugte Gruppe eine Doppelbindung oder zwei, drei oder vier Doppelbindungen. Werden mehr als eine Doppelbindung verwendet, können die Doppelbindungen konjugiert sein. Erfindungsgemäß ist es indes von Vorteil, wenn die Doppelbindungen isoliert, insbesondere jede für sich endständig, in der hier in Rede stehenden Gruppe vorliegen. Erfindungsgemäß ist es von besonderem Vorteil zwei, insbesondere eine, Doppelbindung zu verwenden.

Das Dual-Cure-Bindemittel (A) enthält im statistischen Mittel mindestens eine der vorstehend beschriebenen mit aktinischer Strahlung aktivierbaren Gruppen. Dies bedeutet, daß die Funktionalität des Bindemittels (A) in dieser Hinsicht ganzzahlig, d.h., beispielsweise gleich zwei, drei, vier, fünf oder mehr ist, oder nicht ganzzahlig, d.h., beispielsweise gleich 2,1 bis 10,5 oder mehr ist. Welche Funktionalität man wählt, richtet sich nach den Erfordernissen, die an den jeweiligen erfindungsgemäßen Dual-Cure-Beschichtungsstoff gestellt werden.

Werden im statistischen Mittel mehr als eine mit aktinischer Strahlung aktivierbare Gruppe pro Molekül angewandt, sind die Gruppen strukturell voneinander verschieden oder von gleicher Struktur.

Sind sie strukturell voneinander verschieden, bedeutet dies im Rahmen der vorliegenden Erfindung, daß zwei, drei, vier oder mehr, insbesondere aber zwei, mit aktinischer Strahlung aktivierbare Gruppen verwendet werden, die sich von zwei, drei, vier oder mehr, insbesondere aber zwei, Monomerklassen ableiten.

Beispiele geeigneter Gruppen sind (Meth)Acrylat-, Ethacrylat-, Crotonat-, Cinnamat-, Vinylether-, Vinylester-, Dicyclopentadienyl-, Norbomenyl-, Isoprenyl-, Isopropenyl-, Allyl- oder Butenylgruppen; Dicyclopentadienyl-, Norbomenyl-, Isoprenyl-, Isopropenyl-, Allyl- oder Butenylethergruppen oder Dicyclopentadienyl-, Norbornenyl-, Isoprenyl-, Isopropenyl-, Allyl- oder Butenylestergruppen, insbesondere aber Acrylatgruppen.

Vorzugsweise sind die Gruppen über Urethan-, Harnstoff-, Allophanat-, Ester-, Ether- und/oder Amidgruppen, insbesondere aber über Estergruppen, an die jeweiligen Grundstrukturen der Bindemittel (A) gebunden. Üblicherweise geschieht dies durch übliche und bekannte polymeranaloge Reaktionen wie etwa die Reaktion von seitenständigen Glycidylgruppen mit den vorstehend beschriebenen olefinisch ungesättigten Monomeren, die eine Säuregruppe enthalten, von seitenständigen Hydroxylgruppen mit den Halogeniden dieser Monomeren, von Hydroxylgruppen mit Doppelbindungen enhaltenden Isocyanaten wie Vinylisocyanat, Methacryloylisocyanat und/oder 1-(1-Isocyanato-1-methylethyl)-3-(1-methylethenyl)-benzol (TMI® der Firma CYTEC) oder von Isocanatgruppen mit den vorstehend beschriebenen hydroxylgruppenhaltigen Monomeren.

Es können in den erfindungsgemäßen Dual-Cure-Beschichtungsstoffen indes auch Gemische aus rein thermisch härtbaren und rein mit aktinischer Strahlung härtbaren Bindemitteln (A) angewandt werden.

Die stoffliche Zusammensetzung der Bindemittel (A) weist im Grunde keine Besonderheiten auf, sondern es kommen
- all die in den US-Patentschrift US 4,268,542 A1 oder US 5,379,947 A1 und den Patentanmeldungen DE 27 10 421 A1, DE 195 40 977 A1, DE 195 18 392 A1, DE 196 17 086 A1, DE 196 13 547A1, DE 196 18 657 A1, DE 196 52 813 A1, DE 196 17 086 A1, DE 198 14 471 A1, DE 198 41 842A1 DE 198 41 408 A1, DE 199 08 018A1 oder DE 199 08 013A1 oder der europäischen Patentschrift EP 0 652 264 A1 beschriebenen, für die Verwendung in thermisch und/oder mit aktinischer Strahlung härtbaren Pulverklarlack-Slurries vorgesehenen Bindemittel,
- all die in der deutschen Patentanmeldung DE 42 04 518 A1 beschriebenen, wie die Verwendung in thermisch härtbaren Klarlacken vorgesehenen Bindemittel,
- all die in den Patentanmeldungen DE 198 18 735 A1, DE 198 35 296 A1, DE 197 36 083 A1 oder DE 198 41 842A1 beschriebenen, für die Verwendung in Dual-Cure-Klarlacken vorgesehenen Bindemittel oder
- all die in der deutschen Patentanmeldung DE 42 22 194 A1, der Produkt-Information der Firma BASF Lacke + Farben AG, "Pulverlacke", 1990, oder der Firmenschrift von BASF Coatings AG "Pulverlacke, Pulverlacke für industrielle Anwendungen", Januar, 2000 beschriebenen, für die Verwendung in thermisch härtbaren Pulverklarlacken vorgesehenen Bindemittel in Betracht, soweit es sich hierbei um Polyester handelt.

Als zusätzliche Bindemittel für die erfindungsgemäßen Dual-Cure-Beschichtungsstoffe kommen die in den den europäischen Patentanmeldungen EP 0 928 800 A1, EP 0 636 669 A1, EP 0 410 242 A1, EP 0 783 534 A1, EP 0 650 978 A1, EP 0 650 979 A1, EP 0 650 985 A1, EP 0 540 884 A1,p 0 568 967 A1, EP 0 054 505 A1 oder EP 0 002 866 A1, den deutschen Patentanmeldungen DE 197 09 467 A1, DE 42 03 278A1, DE 33 16 593 A1, DE 38 36 370 A1, DE 24 36 186 A1 oder DE 20 03 579 B1, den internationalen Patentanmeldungen WO 97/46549 oder WO 99/14254 oder den amerikanischen Patentschriften US 5,824,373 A1, US 4,675,234 A1, US 4,634,602 A1, 4,424,252 A1, US 4,208,313 A1, US 4,163,810 A1, US 4,129,488 A1, US 4,064,161 A1 oder US 3,974,303 A1 beschriebenen, zur Verwendung in UV-härtbaren Klarlacken und Pulverklarlacken vorgesehenen Bindemittel in Betracht.

Auch die Herstellung der Bindemittel (A) weist keine methodischen Besonderheiten auf, sondern erfolgt mit Hilfe der üblichen und bekannten Methoden der Polymerenchemie, wie sie beispielsweise in den vorstehend aufgeführten Patentschriften im Detail beschrieben werden.

Die Herstellung von Polyestern (A) wird beispielsweise in dem Standardwerk Ullmanns Encyklopädie der technische Chemie, 3. Auflage, Band 14, Urban & Schwarzenberg, München, Berlin, 1963, Seiten 80 bis 89 und Seiten 99 bis 105, in den Büchern: "Résines Alkydes-Polyesters" von J. Bourry, Paris, Verlag Dunod, 1952, "Alkyd Resins" von C. R. Martens, Reinhold Publishing Corporation, New York, 1961, sowie "Alkyd Resin Technology" von T. C. Patton, Intersience Publishers, 1962, oder in der deutschen Patentanmeldung DE 42 04 518A1 beschrieben.

Der Anteil der erfindungsgemäß zu verwendenden Bindemitteln (A) an den erfindungsgemäßen Beschichtungsstoffen kann ebenfalls außerordentlich breit variieren und richtet sich in erster Linie nach dem Verwendungszweck der Beschichtungsstoffe. Sofern die erfindungsgemäßen Beschichtungsstoffe thermisch oder thermisch und mit aktinischer Strahlung härtbar sind, richtet sich der Gehalt insbesondere nach der Funktionalität der Bindemittel (A) bezüglich der Vernetzungsreaktion mit dem Vernetzungsmittel (E). Bevorzugt werden 10 bis 80, besonders bevorzugt 15 bis 70 und insbesondere 20 bis 60 Gew.-%, jeweils bezogen auf den Festkörpergehalt des erfindungsgemäßen Beschichtungsstoffs, verwendet.

Der dritte wesentliche Bestandteil des erfindungsgemäßen Beschichtungsstoffs ist mindestens ein farb- und/oder effektgebendes, insbesondere ein effektgebendes, Pigment (B).

Beispiele geeigneter Effektpigmente sind Metallplättchenpigmente wie handelsübliche Aluminiumbronzen, gemäß DE 36 36 183 A1 chromatierte Aluminiumbronzen, und handelsübliche Edelstahlbronzen sowie nichtmetallische Effektpigmente, wie zum Beispiel Perlglanz- bzw. Interferenzpigmente, plättchenförmige Effektpigmente auf der Basis von Eisenoxid, das einen Farbton von Rosa bis Braunrot aufweist oder flüssigkristalline Effektpigmente. Ergänzend wird auf Römpp Lexikon Lacke und Druckfarben, Georg Thieme Verlag, 1998, Seiten 176, »Effektpigmente« und Seiten 380 und 381 »Metalloxid-Glimmer-Pigmente« bis »Metallpigmente«, und die Patentanmeldungen und Patente DE 36 36 156 A1, DE 37 18 446 A1, DE 37 19 804 A1, DE 39 30 601 A1, EP 0 068 311 A1, EP 0 264 843A1, EP 0 265 820A1, EP 0 283 852A1, EP 0 293 746 A1, EP 0 417 567 A1, US 4,828,826 A oder US 5,244,649 A verwiesen.

Beispiele für geeignete anorganische farbgebende Pigmente sind Weißpigmente wie Titandioxid, Zinkweiß, Zinksulfid oder Lithopone; Schwarzpigmente wie Ruß, Eisen-Mangan-Schwarz oder Spinellschwarz; Buntpigmente wie Chromoxid, Chromoxidhydratgrün, Kobaltgrün oder Ultramaringrün, Kobaltblau, Ultramarinblau oder Manganblau, Ultramarinviolett oder Kobalt- und Manganviolett, Eisenoxidrot, Cadmiumsulfoselenid, Molybdatrot oder Ultramarinrot; Eisenoxidbraun, Mischbraun, Spinell- und Korundphasen oder Chromorange; oder Eisenoxidgelb, Nickeltitangelb, Chromtitangelb, Cadmiumsulfid, Cadmiumzinksulfid, Chromgelb oder Bismutvanadat.

Beispiele für geeignete organische farbgebende Pigmente sind Monoazopigmente, Bisazopigmente, Anthrachinonpigmente, Benzimidazolpigmente, Chinacridonpigmente, Chinophthalonpigmente, Diketopyrrolopyrrolpigmente, Dioxazinpigmente, Indanthronpigmente, Isoindolinpigmente, Isoindolinonpigmente, Azomethinpigmente, Thioindigopigmente, Metallkomplexpigmente, Perinonpigmente, Perylenpigmente, Phthalocyaninpigmente oder Anilinschwarz.

Ergänzend wird auf Römpp Lexikon Lacke und Druckfarben, Georg Thieme Verlag, 1998, Seiten 180 und 181, »Eisenblau-Pigmente« bis »Eisenoxidschwarz«, Seiten 451 bis 453 »Pigmente« bis »Pigmentvolumenkonzentration«, Seite 563 »Thioindigo-Pigmente«, Seite 567 »Titandioxid-Pigmente«, Seiten 400 und 467, »Natürlich vorkommende Pigmente«, Seite 459 »Polycyclische Pigmente«, Seite 52, »Azomethin-Pigmente«, »Azopigmente«, und Seite 379, »MetallkomplexPigmente«, verwiesen.

Die Pigmente (B) können als solche in den erfindunggemäßen Beschichtungsstoff eingearbeitet werden, sofern sie sich hierbei leicht verteilen und nicht agglomerieren und/oder ihre für die optischen Effekte verantwortliche Form nicht geschädigt oder zerstört wird. Erfindungsgemäß ist es von Vorteil, wenn die Pigmente (B) als Pigmentpasten eingearbeitet werden. Weitere Vorteile resultieren, wenn als Pastenharze oder Reibharze Bindemittel (A) verwendet werden, die im erfindungsgemäßen Beschichtungsstoff enthalten sind (vgl. auch Römpp Lexikon Lacke und Druckfarben, Georg Thieme Verlag, Stuttgart, New York, 1998, Pigmentpräparationen «, Seite 452).

Der Anteil der Pigmente (B) an dem erfindungsgemäßen Beschichtungsstoff kann außerordentlich breit variieren und richtet sich vor allem nach der Deckkraft der Pigmente, dem gewünschten Farbton und dem gewünschten optischen Effekt. Vorzugsweise sind die Pigmente (B) in dem erfindungsgemäßen Beschichtungsstoff in einer Menge von 0,1 bis 50, bevorzugt 0,5 bis 45, besonders bevorzugt 0,5 bis 40, ganz besonders bevorzugt 0,5 bis 35 und insbesondere 0,5 bis 30 Gew.-%, jeweils bezogenen auf den Festkörpergehalt des erfindungsgemäßen Beschichtungsstoffs, enthalten.

Darüber hinaus können die erfindungsgemäßen Beschichtungsstoffe fluoreszierende, elektrisch leitfähige und/oder magnetisch abschirmende Pigmente, Metallpulver, organische, transparente oder opake Füllstoffe und/oder Nanopartikel (D) enthalten.

Beispiele für fluoreszierende Pigmente (Tagesleuchtpigmente) sind Bis(azomethin)-Pigmente.

Beispiele für geeignete elektrisch leitfähige Pigmente sind Titandioxid/Zinnoxid-Pigmente.

Beispiele für magnetisch abschirmende Pigmente sind Pigmente auf der Basis von Eisenoxiden oder Chromdioxid.

Beispiele für geeignete Metallpulver sind Pulver aus Metallen und Metallegierungen, wie Aluminium, Zink, Kupfer, Bronze oder Messing.

Beispiele organische Füllstoffe sind Kunststoffpulver, insbesondere aus Poylamid oder Polyacrlynitril.

Geeignete Nanopartikel werden ausgewählt aus der Gruppe, bestehend aus hydrophilen und hydrophoben, insbesondere hydrophilen, Nanopartikeln auf der Basis von Siliziumdioxid, Aluminiumoxid, Zinkoxid, Zirkoniumoxid und der Polysäuren und Heteropolysäuren von Übergangsmetallen, vorzugsweise von Molybdän und Wolfram, mit einer Primärartikelgröße < 50 nm, bevorzugt 5 bis 50 nm, insbesondere 10 bis 30 nm. Vorzugsweise haben die hydrophilen Nanopartikel keinen Mattierungseffekt. Besonders bevorzugt werden Nanopartikel auf der Basis von Siliziumdioxid verwendet.

Ganz besonders bevorzugt werden hydrophile pyrogene Siliziumdioxide verwendet, deren Agglomerate und Aggregate eine kettenförmige Struktur haben und die durch die Flammenhydrolyse von Siliziumtetrachlorid in einer Knallgasflamme herstellbar sind. Diese werden beispielweise von der Firma Degussa unter der Marke Aerosil ® vertrieben. Ganz besonders bevorzugt werden auch gefällte Wassergläser, wie Nanohektorite, die beispielsweise von der Firma Südchemie unter der Marke Optigel ® oder von der Firma Laporte unter der Marke Laponite ® vertrieben werden, verwendet.

Weitere geeignete Nanopartikel werden in dem amerikanischen Patent US 4,652,470 A, Spalte 7, Zeile 49, bis Spalte 13, Zeile 36, beschrieben.

Die fremdvernetzenden thermisch härtbaren und thermisch und mit aktinischer Strahlung härtbaren erfindungsgemäßen Beschichtungsstoffen enthalten mindestens ein Vernetzungsmittel (E), das mindestens eine der vorstehend beschriebenen komplementären reaktiven funktionellen Gruppen enthält.

Geeignete Vernetzungsmittel (E) sind aus der deutschen Patentanmeldung DE 199 24 171 A1, Seite 7, Seite 38, bis Seite 8, Zeile 47, bekannt.

Der erfindungsgemäße Beschichtungsstoff enthält außerdem mindestens ein organisches Lösemittel (F). Dabei kann es sich um niedrig- und hochsiedende ("lange") organische Lösemittel (F) handeln. Vorzugsweise sind die organischen Lösemittel (F) inert, d. h., daß sie mit den übrigen Bestandteilen des erfindungsgemäßen Beschichtungsstoffs keine Reaktionen eingehen, es sei denn, es handelt sich um die nachstehend aufgeführten thermisch oder mit aktinischer Strahlung härtbaren Reakivverdünner (G). Vorzugsweise werden die organischen Lösemittel aus den in D. Stoye und W. Freitag (Editors), »Paints, Coatings and Solvents«, Second, Completely Revised Edition, Wiley-VCH, Weinheim, New York, 1998, »14.9. Solvent Groups«, Seiten 327 bis 373, beschriebenen Lösemitteln ausgewählt.

Der erfindungsgemäße Beschichtungsstoff kann des weiteren mindestens einen lacktypischen Zusatzstoff (G) enthalten.

Beispiele geeigneter Zusatzstoffe (G) sind molekulardispers lösliche Farbstoffe; Lichtschutzmittel, wie UV-Absorber und reversible Radikalfänger (HALS); Antioxidantien; Entlüftungsmittel; Netzmittel; Emulgatoren; Slipadditive; Polymerisationsinhibitoren; Katalysatoren für die thermische Vernetzung; thermolabile radikalische Initiatoren; Photoinitiatoren und -coinitiatoren; thermisch härtbare Reaktivverdünner; mit aktinischer Strahlung härtbare Reakiwerdünner; mit aktinischer Strahlung härtbare Bindemittel; Haftvermittler; Verlaufmittel; filmbildende Hilfsmittel; Rheologiehilfsmittel (Verdicker und/oder Sag Control Agents); Flammschutzmittel; Korrosionsinhibitoren; Rieselhilfen; Wachse; Sikkative; Biozide und/oder Mattierungsmittel; wie sie beispielsweise in dem Lehrbuch »Lackadditive« von Johan Bieleman, Wiley-VCH, Weinheim, New York, 1998, in der deutschen Patentanmeldung DE 199 14 896 A1, Spalte 14, Seite 26, bis Spalte 15, Zeile 46, im Detail beschrieben werden. Ergänzend wird noch auf die DE 199 04 317 A1 und DE 198 55 125 A1 verwiesen.

Der erfindungsgemäße Beschichtungsstoff, insbesondere der erfindungsgemäße Basislack, ist hervorragend für die Herstellung von farb- und/oder effektgebenden Mehrschichtlackierungen auf grundierten und ungrundierten Substraten nach dem Naß-in-naß-Verfahren geeignet. Des weiteren ist der erfindungsgemäße Beschichtungsstoff, insbesondere der erfindungsgemäße Unidecklack, hervorragend für die Herstellung von einschichtigen farb- und/oder effektgebenden Lackierungen geeignet.

Ansonsten kann der enindungsgemäße Beschichtungsstoff auch noch als Klebstoff oder Dichtungsmasse oder als Ausgangsprodukt für die Herstellung freitragender Lackfilme verwendet werden.

Besondere Vorteile entfaltet der erfindungsgemäße Beschichtungsstoff in seiner Verwendung als Basislack im Rahmen des Naß-in-naß-Verfahrens bei dem der Basislack auf das grundierte oder ungrundierte Substrat appliziert und abgelüftet und/oder getrocknet, indes nicht gehärtet wird, wonach man auf die Basislackschicht einen Klariack appliziert und die resultierende Klarlackschicht gemeinsam mit der Basislackschicht thermisch oder thermisch und mit aktinischer Strahlung (Dual Cure) härtet.

Als Substrate kommen alle zu lackierenden Oberflächen, die durch eine Härtung der hierauf befindlichen Schichten unter der Anwendung von Hitze oder der kombinierten Anwendung von Hitze und aktinischer Strahlung (Dual Cure) nicht geschädigt werden, in Betracht; das sind z. B. Metalle, Kunststoffe, Holz, Keramik, Stein, Textil, Faserverbunde, Leder, Glas, Glasfasern, Glas- und Steinwolle, mineral- und harzgebundene Baustoffe, wie Gips- und Zementplatten oder Dachziegel, sowie Verbunde dieser Materialien.

Im Falle elektrisch leitfähiger Substrate können Grundierungen verwendet werden, die in üblicher und bekannter Weise aus Elektrotauchlacken (ETL) hergestellt werden. Hierfür kommen sowohl anodische (ATL) als auch kathodische (KTL) Elektrotauchlacke, insbesondere aber KTL, in Betracht. Üblicherweise wird, insbesondere in der Automobillackierung, hierauf noch eine Füllerlackierung oder Steinschlagschutzgrundierung aufgetragen, die als Bestandteil der Grundierung angesehen werden kann.

Es können auch grundierte oder ungrundierte Kunststoffteile aus z. B. ABS, AMMA, ASA, CA, CAB, EP, UF, CF, MF, MPF, PF, PAN, PA, PE, HDPE, LDPE, LLDPE, UHMWPE, PC, PC/PBT, PC/PA, PET, PMMA, PP, PS, SB, PUR, PVC, RF, SAN, PBT, PPE, POM, PUR-RIM, SMC, BMC, PP-EPDM und UP (Kurzbezeichnungen nach DIN 7728T1) lackiert, geklebt oder abgedichtet werden. Im Falle von nichtfunktionalisierten und/oder unpolaren Substratoberflächen können diese vor der Beschichtung in bekannter Weise einer Vorbehandlung, wie mit einem Plasma oder mit Beflammen, unterzogen oder mit einer Hydrogrundierung versehen werden.

Demnach sind die erfindungsgemäßen Beschichtungsstoffe hervorragend für die Beschichtung von Kraftfahrzeugkarosserien, Teilen von Kraftfahrzeugkarosserien, Kraftfahrzeugen im Innen- und Außenbereich, Bauwerken im Innen- und Außenbereich, Türen, Fenstern und Möbeln sowie für das Lackieren im Rahmen der industriellen Lackierung beispielsweise von Kleinteilen, wie Muttern, Schrauben, Felgen oder Radkappen, von Coils, Container, Emballagen, elektrotechnischen Bauteilen, wie Motorwicklungen oder Transformatorwicklungen, und von weißer Ware, wie Haushaltsgeräte, Heizkessel und Radiatoren, geeignet.

Im Rahmen der Kraftfahrzeuglackierung sind die erfindungsgemäßen Beschichtungsstoffen hervorragend für die Herstellung von Originallackierungen (OEM) und Reparaturlackierungen geeignet.

Die Applikation der erfindungsgemäßen Beschichtungsstoffe kann durch alle üblichen Applikationsmethoden, wie z.B. Spritzen, Rakeln, Streichen, Gießen, Tauchen, Tränken, Träufeln oder Walzen erfolgen. Dabei kann das zu beschichtende Substrat als solches ruhen, wobei die Applikationseinrichtung oder -anlage bewegt wird. Indes kann auch das zu beschichtende Substrat, insbesondere ein Coil, bewegt werden, wobei die Applikationsanlage relativ zum Substrat ruht oder in geeigneter Weise bewegt wird.

Vorzugsweise werden Spritzapplikationsmethoden angewandt, wie zum Beispiel Druckluftspritzen, Airless-Spritzen, Hochrotation, elektrostatischer Sprühauftrag (ESTA), gegebenenfalls verbunden mit Heißspritzapplikation wie zum Beispiel Hot-Air - Heißspritzen. Die Applikation kann bei Temperaturen von max. 70 bis 80 °C durchgeführt werden, so daß geeignete Applikationsviskositäten erreicht werden, ohne daß bei der kurzzeitig einwirkenden thermischen Belastung eine Veränderung oder Schädigungen des Basislacks und seines gegebenenfalls wiederaufzubereitenden Overspray eintreten. So kann das Heißspritzen so ausgestaltet sein, daß der Basislack nur sehr kurz in der oder kurz vor der Spritzdüse erhitzt wird.

Besonders vorteilhaft ist es, den erfindungsgemäßen Basislack in einem ersten Auftrag durch ESTA und einem zweiten Auftrag pneumatisch zu applizieren.

Enthalten die erfindungsgemäßen Basislacke Bestandteile, die mit aktinischer Strahlung aktivierbar sind, wird die Applikation vorzugsweise unter Ausschluß von Licht durchgeführt. Selbstverständlich können diese Applikationsmethoden im Rahmen des erfindungsgemäßen Naß-in-naß-Verfahrens auch für die Applikation der Klarlackschicht verwendet werden.

Die Aushärtung kann nach einer gewissen Ruhezeit erfolgen. Sie kann eine Dauer von 30 s bis 2 h, vorzugsweise 1 min bis 1 h und insbesondere 1 min bis 45 min haben. Die Ruhezeit dient beispielsweise zum Verlauf und zur Entgasung der Lackschichten oder zum Verdunsten von flüchtigen Bestandteilen wie Lösemittel. Die Ruhezeit kann durch die Anwendung erhöhter Temperaturen bis 90 °C und/oder durch eine reduzierte Luftfeuchte < 10g Wasser/kg Luft, insbesondere < 5g/kg Luft, unterstützt und/oder verkürzt werden, sofern hierbei keine Schädigungen oder Veränderungen der Lackschichten eintreten, etwa eine vorzeitige vollständige Vernetzung.

Die physikalische Härtung findet bereits bei während der Ruhezeit statt und kann durch die Anwendung von Hitze beschleunigt werden, wobei die nachstehend bei der thermischen Härtung angewandten Methoden angewandt werden können.

Die thermische Härtung weist keine methodischen Besonderheiten auf, sondern erfolgt nach den üblichen und bekannten Methoden wie Erhitzen in einem Umluftofen oder Bestrahlen mit IR-Lampen. Hierbei kann die thermische Härtung auch stufenweise erfolgen. Vorteilhafterweise erfolgt die thermische Härtung bei einer Temperatur von 50 bis 100 °C, besonders bevorzugt 60 bis 100 °C und insbesondere 80 bis 100 ° C während einer Zeit von 1 min bis zu 2 h, besonders bevorzugt 2 min bis zu 1 h und insbesondere 3 min bis 45 min. Werden Substrate verwendet, welche thermisch stark belastbar sind, kann die thermische Vernetzung auch bei Temperaturen oberhalb 100 °C durchgeführt werden. Im allgemeinen empfiehlt es sich, hierbei Temperaturen von 180 °C, vorzugsweise 160 °C und insbesondere 155 °C nicht zu überschreiten.

Auch die Härtung mit aktinischer Strahlung weist keine methodischen Besonderheiten auf, sondern erfolgt in üblicher und bekannter Weise durch Bestrahlen mit UV-Lampen und/oder Elektronenstrahlquellen vorzugsweise unter Inertgas, wie es beispielsweise in der deutschen Patentanmeldung DE 198 18 735 A1, Spalte 10, Zeilen 31 bis 61, beschrieben wird.

Bei der gemeinsamen Härtung der erfindungsgemäßen Dual Cure-Basislackschichten mit den Klarlackschichten können die thermische Härtung und Härtung mit aktinischer Strahlung gleichzeitig oder alternierend eingesetzt werden. Werden die beiden Härtungsmethoden alternierend verwendet, kann beispielsweise mit der thermischen Härtung begonnen und mit der Härtung mit aktinischer Strahlung geendet werden. In anderen Fällen kann es sich als vorteilhaft erweisen, mit der Härtung mit aktinischer Strahlung zu beginnen und hiermit zu enden. Der Fachmann kann die Härtungsmethode, welche für den jeweiligen Einzelfall am vorteilhaftesten ist, aufgrund seines allgemeinen Fachwissens gegebenenfalls unter Zuhilfenahme einfacher Vorversuche ermitteln. Ergänzend wird auf die deutsche Patentanmeldung DE 198 18 735 A1, Spalte 10, Zeilen 31, bis Spalte 11, Zeile 33, verwiesen.

Hierbei zeigt sich als weiterer besonderer Vorteil des erfindungsgemäßen Basislacks, daß sämtliche üblichen und bekannten Klarlacke im Rahmen des Naß-in-naß-Verfahrens mit der erfindungsgemäßen Basislackschicht kombiniert werden können.

An sich bekannte Klarlacke sind Ein- oder Mehrkomponentenklarlacke, Pulverklarlacke, Pulverslurryklarlacke, UV-härtbare Klarlacke oder Sealer, wie sie aus den Patentanmeldungen, Patentschriften und Veröffentlichungen DE 42 04 518 A1, EP 0 594 068 A1, EP 0 594 071 A1, EP 0 594 142A1, EP 0 604 992 A1, EP 0 596 460 A1, WO 94/10211, WO 94/10212, WO 94/10213, WO 94/22969 oder WO 92/22615, US 5,474,811 A1, US 5,356,669 A1oder US 5,605,965 A1, DE 42 22 194 A1, der Produkt-Information der Firma BASF Lacke + Farben AG, "Pulverlacke", 1990, der Firmenschrift von BASF Coatings AG "Pulverlacke, Pulverlacke für industrielle Anwendungen", Januar 2000, US 4,268,542A1, DE 195 40 977 A1, DE 195 18 392 A1, DE 196 17 086A1, DE-A-196 13 547, DE 196 52 813 A1, DE-A-198 14 471 A1, EP 0 928 800 A1, EP 0 636 669 A1, EP 0 410 242A1, EP 0 783 534 A1, EP 0 650 978A1, EP 0 650 979 A1, EP 0 650 985A1, EP 0 540 884 A1, EP 0 568 967 A1, EP 0 054 505 A1, EP 0 002 866 A1, DE 197 09 467 A1, DE 42 03 278 A1, DE 33 16 593A1, DE 38 36 370 A1, DE 24 36 186 A1, DE 20 03 579B1, WO 97/46549, WO 99/14254, US 5,824,373 A1, US 4,675,234A1, US 4,634,602 A1, US 4,424,252 A1, US 4,208,313 A1, US 4,163,810 A1, US 4,129,488 A1, US 4,064,161 A1, US 3,974,303 A1, EP 0 844 286A1, DE 43 03 570 A1, DE 34 07 087 A1, DE 40 11 045 A1, DE 40 25 215 A1, DE 38 28 098 A1, DE 40 20 316 A1 oder DE 41 22 743 A1 bekannt sind.

Innerhalb der erfindungsgemäßen Mehrschichtlackierung kann die Dicke der einzelnen Schichten breit variieren. Erfindungsgemäß ist es indes von Vorteil, wenn die Basislackschicht eine Dicke von 5 bis 25 µm, insbesondere 7 bis 20µm, und die Klarlackschicht eine Dicke von 15 bis 120 µm, vorzugsweise 30 bis 80 µm und insbesondere 40 bis 70 µm aufweist.

Die erfindungsgemäßen Ein- und Mehrschichtlackierungen weisen hervorragende optische, mechanische und chemische Eigenschaften auf. So sind sie frei von jeglichen Oberflächenstörungen wie Schrumpf (wrinkling). Sie weisen außerdem eine besonders hohe Deckkraft und hervorragende optische Effekte, insbesondere wolkenfreie Metallic-Effekte, auf.

Außerdem treten bei der Reparaturlackierung unter Verwendung der erfindungsgemäßen Beschichtungsstoffe keine oder nur sehr geringe, akzeptable Unterschiede im Farbton zwischen der Originallackierungen der Reparaturlackierung auf, wenn ein und derselbe erfindungsgemäße Basislack verwendet wird.

### Beispiele und Vergleichsversuche

### Herstellbeispiel 1

### Die Herstellung einer erfindungsgemäß zu verwendenden Siliziumdioxidpaste

75 Gewichtsteile eines handelsüblichen, für Basislacke geeigneten verzweigten Polyesterharzes eines Festkörpergehalts von 60 Gew.-% (Lösemittel: Solventnaphtha® / Butylacetat 1 : 1) und einer OH-Zahl von 80 mg KOH/g, 10 Gewichtsteile eines Siliziumdioxidpulvers einer mittleren Teilchengröße von 5,8 µm und einer Dichte von 2,5 g/cm-3 und 15 Gewichtsteile Butylglykolacetat wurden miteinander vermischt und homogenisiert.

### Herstellbeispiel 2

### Die Herstellung der Lösung eines filmbildende Hilfsmittels

15 Gewichtsteile eines Celluloseesters der Firma Eastman mit einem Acetylgehalt von 16 Gew.-% und einem Butyratgehalt von 33 - 38,9 Gew.-%, bezogen auf den Celluloseester, wurden in 75 Gewichtsteilen eines Gemischs aus Butylacetat und Isotridecylalkohol im Gewichtsverhältnis von 23 : 1 gelöst.

### Herstellbeispiel 3

### Die Herstellung einer Paste eines Aluminiumeffektpigments

Die Paste wurde aus 33 Gewichtsteilen eines Aluminiumeffektpigmets, 33 Gewichtsteilen einer Mischung aus, bezogen auf die Mischung, 37,5 Gew.-% einer 6prozentigen Dispersion eines modifizierten Polyethylenwachses in Butylacetat/Solventnaphtha ®, 12,5 Gew.-% Butylacetat und 50 Gew.-% der Lösung des filmbildenden Hilfsmittels gemäß Herstellbeispiel 2, und 33 Gewichtsteilen Butylacetat hergestellt.

### Beispiel 1

### Die Herstellung eines erfindungsgemäßen Basislacks

Der erfindungsgemäße Basislack wurde durch Vermischen der folgenden Bestandteile in der angegebenen Reihenfolge und Homogenisieren der resultierenden Mischungen hergestellt:
- 225 Gewichtsteile eines 6prozentigen Dispersion eines modifizierten Polyethylenwachses in Butylacetat/Solventnaphtha ®,
- 183 Gewichtsteile des filmbildenden Hilfsmittels des Herstellbeispiels 2,
- 126 Gewichtsteile eines handelsüblichen, für Basislacke geeigneten verzweigten Polyesterharzes eines Festkörpergehalts von 60 Gew.-% (Lösemittel: Solventnaphtha® / Butylacetat 1 : 1) und einer OH-Zahl von 80 mg KOH/g,
- 63 Gewichtsteile eines strukturviskosen Polyesters (Setal ® 90173 der Firma Akzo),
- 126 Gewichtsteile eine Lösung eines mit Butanol partiell veretherten, mittelreaktiven Melaminharzes (55prozentig in Butanol),
- 24 Gewichtsteile eines epoxidierten Fettsäureesters,
- 14 Gewichtsteile Butylacetat,
- 13 Gewichtsteile Butanol,
- 55 Gewichtsteile Butylglykolacetat,
- 1,3 Gewichtsteile eines handelsüblichen Lackadditivs (Byk ® 410 der Firma Byk Chemie),
- 5 Gewichtsteile eines silikonfreien Verlaufmittels auf der Basis eines aminharzmodifizierten Methacrylatcopolymerisats,
- 20 Gewichtsteile des Siliziumdioxidpaste des Herstellbeispiels 1,
- 90 Gewichtsteile der Paste eines Aluminiumeffektpigments gemäß Herstellbeispiel 3 und
- 75 Gewichtsteile Butylacetat.

Der Basislack wies eine Viskosität von 23 Sekunden im DIN4-Auslaufbecher auf. Für die Applikation wurde der Basislack mit 290 Gewichtsteile Butylacetat auf eine Spritzviskosität von 26 Sekunden im ISO4-Auslaufbecher eingestellt.

### Vergleichsversuch V1

### Herstellung eines nicht erfindungsgemäßen Basislacks

Beispiel 1 wurde wiederholt, nur daß die erfindungsgemäß zu verwendende Siliziumdioxidpaste des Herstellbeispiels 1 nicht verwendet wurde. Der Polyester- und der Lösemittelanteil, der über die Siliziumdioxidpaste in den Basislack 1 des Beispiels 1 eingetragen wurde, wurde im vorliegenden Vergleichsversuche durch Zugabe von Polyester und Lösemittel ausgeglichen.

### Beispiel 2 und Vergleichsversuch V2

### Die Herstellung einer erfindungsgemäßen (Beispiel 2) und einer nicht erfindungsgemäßen (Vergleichsversuch V2) Mehrschichtlackierung

Für das Beispiel 2 wurde der Basislack 1 des Beispiels 1 verwendet.

Für den Vergleichsversuche V1 wurde der Basislack V1 des Vergleichsversuchs V1 verwendet.

Für die Prüfung der anwendungstechnischen Eigenschaften der Basislacke 1 und V1 wurden in üblicher und bekannter Weise Prüftafeln der Abmessungen 30 x 70 cm hergestellt. Hierzu wurden Stahltafeln (Karosseriebleche), die mit einer üblichen und bekannten kathodisch abgeschiedenen und eingebrannten Elektrotauchlackierung beschichtet waren, mit einem handelsüblichen Füller der Firma BASF Coatings AG) beschichtet, wonach die resultierenden Füllerschichten während 5 Minuten bei 20 °C und einer relativen Luftfeuchtigkeit von 65% abgelüftet und in einem Umluftofen während 30 Minuten bei 140 °C eingebrannt wurden.

Nach dem Abkühlen der Prüftafeln auf 20 °C wurden in einer ersten Serie die Basislacke 1 und V1 durch pneumatische Spritzautomatenapplikation im Keil aufgetragen. Anschließend wurden die Basislackschichten während 5 Minuten abgelüftet und mit einem handelsüblichen Zweikomponenten-Klarlack (Firma BASF Coatings AG) überschichtet. Hiernach wurden die Basislackschichten und die Klarlackschichten während 30 Minuten bei 130 °C eingebrannt, wodurch die erfindungsgemäße effektgebende Mehrschichtlackierung des Beispiels 2 und die nicht erfindungsgemäßen Mehrschichtlackierung des Vergleichsversuchs V2 resultierten.

Die Farbtonstabilität der Mehrschichtlackierungen in Abhängigkeit von der Schichtdicke der Basislackierungen wurde mit Hilfe des in der deutschen Patentanmeldung DE 197 09 406 A1 oder dem europäischen Patent EP 0 842 414B1beschriebenen Verfahrens bestimmt. Dabei erwies sich die erfindungsgemäße Mehrschichtlackierung des Beispiels 2 als farbtonstabil, wogegen dies bei der nicht erfindungsgemäßen Mehrschichtlackierung des Vergleichsversuchs V2 nicht der Fall war.

Die erste Serie wurde wiederholt, nur daß die Basislackschichten in gleichmäßiger Schichtdicke deckend appliziert wurden.

Die Prüftafeln wurden unter diffusem Licht aus einem Abstand von 2 bis 3 m in Aufsicht (80°) und in Schrägsicht (40°) hinsichtlich der Hell-Dunkel-Schattierung (Wolken) visuell beurteilt und benotet (Note 1: keine Wolken sichtbar; bis Note 5: Wolken sehr deutlich sichtbar).

Bei dem Beispiel 2 resultierte in Aufsicht und in Schrägsicht die Note 1. Bei dem Vergleichsversuch V2 resultierten in Aufsicht die Note 4 und in Schrägsicht die Note 5. Dies untermauerte, daß durch die erfindungsgemäße Verwendung des Siliziumdioxids eine signifikante Verbesserung der Hell-Dunkel-Schattierung erzielt werden konnte.

### Beispiel 3 und Vergleichsversuch V3

### Die Herstellung einer erfindungsgemäßen (Beispiel 3) und einer nicht erfindungsgemäßen (Vergleichsversuch V3) Reparaturlackierung

Für das Beispiel 3 wurde der Basislack 1 des Beispiels 1 verwendet.

Für den Vergleichsversuch V3 wurde der Basislack V1 des Vergleichsversuchs V1 verwendet.

Für die Prüfung der anwendungstechnischen Eigenschaften der Basislacke 1 und V1 in der Autoreparaturlackierung wurden in üblicher und bekannter Weise Prüftafeln der Abmessungen 30 x 70 cm hergestellt. Hierzu wurden Stahltafeln (Karosseriebleche), die mit einer üblichen und bekannten kathodisch abgeschiedenen und eingebrannten Elektrotauchlackierung beschichtet waren, mit einem handelsüblichen Füller der Firma BASF Coatings AG) beschichtet, wonach die resultierenden Füllerschichten während 5 Minuten bei 20 °C und einer relativen Luftfeuchtigkeit von 65% abgelüftet und in einem Umluftofen während 30 Minuten bei 140 °C eingebrannt wurden.

Nach dem Abkühlen der Prüftafeln auf 20 °C wurden die Basislacke 1 und V1 zu 60% elektrostatisch mit einer ESTA-Hochrotationsglocke und zu 40% pneumatisch deckend appliziert. Anschließend wurden die Basislackschichten während 5 Minuten abgelüftet und mit einem handelsüblichen Zweikomponenten-Klarlack (Firma BASF Coatings AG) überschichtet. Hiernach wurden die Basislackschichten und die Klarlackschichten während 30 Minuten bei 130°C eingebrannt.

Nach dem Abkühlen der Prüftafel auf Raumtemperatur wurden ihre beschichteten Oberflächen zur Hälfte abgedeckt.

Die nicht abgedeckten Hälften der Prüftafeln mit der erfindungsgemäßen Mehrschichtlackierung wurden zur Simulation einer Reparaturlackierung wie vorstehend beschrieben mit einer weiteren erfindungsgemäßen Mehrschichtlackierung versehen (Beispiel 3), indes wurde der Basislack pneumatisch appliziert.

Die nicht abgedeckten Hälften der Prüftafeln mit der nicht erfindungsgemäßen Mehrschichtlackierung wurden zur Simulation einer Reparaturlackierung, wie vorstehend beschrieben, mit einer weiteren nicht erfindungsgemäßen Mehrschichtlackierung versehen (Vergleichsversuch V3), wobei auch hier der Basislack pneumatisch appliziert wurde.

Der Farbtonunterschied zwischen den Originallackierungen und den Reparaturlackierungen wurde farbmetrisch ermittelt und wie folgt benotet:
Note 1, keine Abweichung;
Note 2, geringe Abweichung, noch akzeptabel;
Note 3, mittlerer Abweichung;
Note 4, schon deutlich sichtbarer Abweichung; und
Note 5, starker Abweichung.

Die erfindungsgemäße Reparaturlackierung des Beispiels 3 erhielt die Note 2; die nicht erfindungsgemäße Reparaturlackierung des Vergleichsversuchs V3 erhielt die Note 5.

## Patentansprüche

1. Physikalisch, thermisch oder thermisch und mit aktinischer Strahlung härtbarer, lösemittelhaltiger Beschichtungsstoff, enthaltend
(A) mindestens ein physikalisch, thermisch oder thermisch und mit aktinischer Strahlung härtbares Bindemittel,
(B) mindestens ein farb- und/oder effektgebendes Pigment und
(C) mindestens ein farbloses, gegenüber den übrigen Bestandteilen des Beschichtungsstoffs im wesentlichen inertes, transparentes oder opakes Pulver, dessen Partikel eine Dichte von 1,25 bis 3,6 gcm⁻³ aufweisen,
**dadurch gekennzeichnet, dass** das Bindemittel (A) bzw. die Bindemittel (A) Polyester ist bzw. sind und das Pulver (C) eine mittlere Teilchengröße von 4,0 bis 7,0 µm und eine maximale Teilchengröße unterhalb 12 µm aufweist und aus Siliziumdioxid besteht.

2. Lösemittelhaltiger Beschichtungsstoff nach Anspruch 1, **dadurch gekennzeichnet, dass** die Partikel eine Dichte von 1,4 bis 3,0 gcm⁻³ aufweisen.

3. Lösemittelhaltiger Beschichtungsstoff nach einem der Ansprüche 1 bis 2, **dadurch gekennzeichnet, dass** die Partikel eine sphärische Form haben.

4. Lösemittelhaltiger Beschichtungsstoff nach einem der Ansprüche 1 bis 3, **dadurch gekennzeichnet, dass** er das Pulver (C) in einer Menge von, bezogen auf den Festkörpergehalt, 0,05 bis 7,0 Gew.-% enthält.

5. Verwendung des lösemittelhaltigen Beschichtungsstoffs gemäß einem der Ansprüche 1 bis 4 für die Herstellung einschichtiger oder mehrschichtiger farb- und/oder effektgebender Lackierungen für die Kraftfahrzeugerst- und - reparaturlackierung, die industrielle Lackierung, inclusive Coil Coating und Container Coating, die Kunststofflackierung und die Möbellackierung.

6. Verwendung nach Anspruch 5, **dadurch gekennzeichnet, dass** der lösemittelhaltige Beschichtungsstoff als Basislack und Unidecklack in der Kraftfahrzeugerst- und -reparaturlackierung verwendet wird.

7. Verfahren zur Herstellung einer ein- oder mehrschichtigen farb- und/oder effektgebenden Lackierung durch Applikation mindestens einer Schicht des lösemittelhaltigen Beschichtungsstoffs gemäß einem der Ansprüche 1 bis 4 auf ein grundiertes oder ungrundiertes Substrat und thermische Härtung oder Härtung mit Hitze und aktinischem Licht der resultierenden Nassschicht(en).

8. Verfahren zur Herstellung einer farb- und/oder effektgebenden Mehrschichtlackierung nach dem Nass-in-nass-Verfahren durch
(I) Applikation einer Basislackschicht auf ein grundiertes oder ungrundiertes Substrat,
(II) Ablüften und/oder Zwischentrocknen der resultierenden Basislackschicht,
(III) Applikation einer Klarlackschicht auf Basislackschicht und
(IV) thermische Härtung oder thermische Härtung und Härtung mit aktinischer Strahlung der beiden Nassschichten,
**dadurch gekennzeichnet, dass** man als Basislack den lösemittelhaltigen Beschichtungsstoff gemäß einem der Ansprüche 1 bis 4 verwendet.

## Claims

1. Solventborne coating material curable physically, thermally, or thermally and with actinic radiation, comprising
A) at least one binder curable physically, thermally or thermally and with actinic radiation,
B) at least one color and/or effect pigment, and
C) at least one colorless, transparent or opaque powder which is substantially inert with respect to the other constituents of the coating material and whose particles have a density of from 1.25 to 3.6 g cm⁻³,
**characterized in that** the binder (A) or the binders A) is/are polyester and the powder (C) has an average particle size of from 4.0 to 7.0 µm and a maximum particle size of below 12 µm and consists of silicon dioxide.

2. Solventborne coating material according to Claim 1, **characterized in that** the particles have a density of from 1.4 to 3.0 g cm⁻³.

3. Solventborne coating material according to either of Claims 1 and 2, **characterized in that** the particles have a spherical shape.

4. Solventborne coating material according to any of Claims 1 to 3, **characterized in that** it comprises the powder (C) in an amount of from 0.05 to 7.0% by weight, based on the solids content.

5. Use of the solventborne coating material according to any of Claims 1 to 4 for producing single-coat or multicoat color and/or effect paint systems for automotive OEM finishing and automotive refinish, for industrial coating, including coil coating and container coating, for the coating of plastics, and for furniture coating.

6. Use according to Claim 5, **characterized in that** the solventborne coating material is used as basecoat material and solid-color topcoat material in automotive OEM finishing and automotive refinish.

7. Process for producing a single-coat or multicoat color and/or effect paint system by applying at least one film of the solventborne coating material according to any of Claims 1 to 4 to a primed or unprimed substrate and subjecting the resulting wet film(s) to thermal curing or curing with heat and actinic light.

8. Process for producing a multicoat color and/or effect paint system by the wet-on-wet technique, by
(I) applying a basecoat film to a primed or unprimed substrate,
(II) flashing off and/or initially drying the resulting basecoat film,
(III) applying a clearcoat film to the basecoat film, and
(IV) subjecting the two wet films to thermal curing or to thermal curing and curing with actinic radiation,
**characterized in that** it comprises using as basecoat material the solventborne coating material according to any of Claims 1 to 4.

## Revendications

1. Matière de revêtement contenant un solvant, durcissable physiquement, thermiquement ou thermiquement et par un rayonnement actinique, qui contient
A) au moins un liant durcissable physiquement, thermiquement ou thermiquement et par un rayonnement actinique,
B) au moins un pigment colorant et/ou à effet et
C) au moins une poudre transparente ou opaque, incolore, essentiellement inerte vis-à-vis des autres composants de la matière de revêtement, dont les particules présentent une densité de 1,25 à 3,6 g.cm⁻³,
**caractérisée en ce que** le liant (A) ou les liants (A) est/sont du polyester et la poudre (C) présente une taille moyenne de particule de 4,0 à 7,0 µm et une taille maximale de particule inférieure à 12 µm et est constituée de dioxyde de silicium.

2. Matière de revêtement contenant un solvant selon la revendication 1, **caractérisée en ce que** les particules présentent une densité de 1,4 à 3,0 g/cm⁻³.

3. Matière de revêtement contenant un solvant selon l'une quelconque des revendications 1 à 2, **caractérisée en ce que** les particules ont une forme sphérique.

4. Matière de revêtement contenant un solvant selon l'une quelconque des revendications 1 à 3, **caractérisée en ce qu'**elle contient la poudre (C) en une quantité, par rapport à la teneur en matière solide, de 0,05 à 7,0 % en poids.

5. Utilisation de la matière de revêtement contenant un solvant selon l'une quelconque des revendications 1 à 4, pour la production de revêtements de peinture colorants et/ou à effet, monocouches ou multicouches, pour la première mise en peinture et le peinturage de réparation d'automobiles, le peinturage industriel, y compris le peinturage de rubans continus (*Coil Coating*) et le peinturage de récipients (*Container Coating*) et le peinturage de meubles.

6. Utilisation selon la revendication 5, **caractérisée en ce que** la matière de revêtement contenant un solvant est utilisée en tant que peinture de fond et peinture de finition universelle dans la première mise en peinture et le peinturage de réparation d'automobiles.

7. Procédé pour la production d'un revêtement de peinture colorant et/ou à effet, mono- ou multicouche, par application d'au moins une couche de la matière de revêtement contenant un solvant selon l'une quelconque des revendications 1 à 4, sur un subjectile muni ou non d'un primaire et durcissement thermique ou durcissement par la chaleur et de la lumière actinique de la/des couche(s) humide(s) résultante(s).

8. Procédé pour la production, selon le procédé humide-sur-humide, d'un revêtement de peinture multicouche colorant et/ou à effet, par
(i) application d'une couche de peinture de fond sur un subjectile muni ou non d'un primaire,
(ii) évaporation et/ou séchage intermédiaire de la couche de peinture de fond résultante,
(iii) application d'une couche de vernis sur la couche de peinture de fond et
(iv) durcissement thermique ou durcissement thermique et par un rayonnement actinique des deux couches humides,
**caractérisé en ce qu'**on utilise en tant que peinture de fond la matière de revêtement contenant un solvant selon l'une quelconque des revendications 1 à 4.
